# EUROPEAN PATENT APPLICATION

(11) **EP 0 803 204 A2**
(43) Date of publication of application: **29.10.1997**
(21) Application number: 97500077.9
(22) Date of filing: 24.04.1997
(51) Int. Cl.: A23L 3/40, A23L 3/44

(54) **Dehydrated food products and processes**

(30) Priority: 26.04.1996 AR 10236996
(71) Applicant: Nutripac S.A., Buenos Aires (AR)
(72) Inventor: Yanovsky, Jorge Fernando, Buenos Aires (AR)
(74) Representative: Ruiz Tome, Francisco Fernando

(57) **Abstract**

A desecated culinary preparation protected for conservation against hydration by an essentially hydrophobic layer formed by frying or cooking in an oily medium. The layer is partially traversed by hydrophilic portions to enable the inner hydrophilic structure of the preparation to be rehydrated for consumption. Rehydration may be carried out prior to consumption by external contacting or spraying with water or the like or during consumption, by the saliva when chewing the preparation. The rehydration rate may be controlled by determining a specific relationship between the outer hydrophobic and hydrophilic areas. The invention further relates to a process for obtaining and conserving the culinary preparation. The process essentially comprises the steps of cooking or frying the product to form the hydrophobic outer layer, chilling the cooked product to freeze the liquid water content therei and thereafter subjecting the product to dehydration treatment such as a lyophilization cycle to sublime the frozen water content and evaporate the free oil content.

## Description

### Field of the Invention:

The instant invention is related to food products and more particularly to obtaining culinary preparations and the culinary preparations thus obtained, as well as to the conservation and marketing thereof. More particularly, the present invention refers to a process for obtaining, conserving and marketing culinary preparations by means of which a food product may be culinarily prepared and transformed into a practically completely dehydrated or desecated state, with a substantial reduction in the oily content thereof in comparison to its original content. Thus, the product may be preserved for a long time and dietary quality thereof may be improved, the product maintaining all its culinary qualities until it is consumed either after it has been rehydrated or while still in its dehydrated state. Even more particularly, the invention refers to fritter or product cooked in oil or in an oily medium and stabilized by dehydration, as well as to a process for preparing the product and to the food product obtained thereby.

### Background of the Invention:

The conservation of food products has always been a matter of interest insofar the search for more effective and less costly processs for making food products in excellent state of conservation for edible consumption at whatever place and later time it is needed.

Insofar food products are concerned, the conservation thereof by freezing has become widespread, enabling these products to be conserved for over one year. On the other hand, dehydration processs have been practiced under strict and extreme parameters such as temperature and vacuum (lyophilization), but mainly for dehydrating pharmaceutical products.

Regarding food products, both freezing and dehydration have been practiced with the knowledge that both these processs can affect both structural and taste qualities of the food products. However, this has not represented or been identified as a severe drawback since such products have always been conserved in their natural state to be later unfrozen or rehydrated by consumers before being culinarily prepared using spices and salts to reconstruct or replace the food taste and flavour lost during the earlier treatment.

Nothing has been suggested or appears to have been tried out regarding preparing, conserving and marketing a culinary preparation that may be conserved in a state such that at the moment it is to be consumed it is in excellent condition to be eaten without missing fundamental properties such as flavour, fragance, etc.

Among the practiced dehydration processes is lyophilization which consists in the sublimation of water or aqueous mixtures. This technique has gained importance in the field of dehydrating human plasma and has been used for dry preservation of enzymes, hormones, vitamines, antibiotics, antibodies, antigens, etc., because of the stabilized permanence of the labiler biomolecules in liofilized matter. However, lyophilization has been circunscribed to a large extent to the pharmaceutical industry because, inter alia, of the expensive techniques used to cause a double change of state in the matter to be frozen and which has a liquid content, to transform the frozen liquid into vapour which must then be condensed to prevent it from mixing with the oil of the vacuum system employed. Although some applications on a reduced scale have been carried out on food products, enabling fresh products to be completely preserved in dry form, such applications have required very sophisticated lyophilization processes and equipmente which have made them too expensive for mass production.

Products which have been liofilized or dehydrated by known treatment techniques enjoy a considerable advantage in that they remain stable at room temperature as long as their water content does not exceed 10% of its final weight. Although the product conserves its original structural conditions which manifest an extreme water covetness or hydroabsorption capability, the resulting hygroscopic state provides for the product to be easily rehydratable, particularly if it is not protected by an adequate barrier against moisture. Should the product acquire more than about 10% moisture, it becomes vulnerable to microbiological attack, increasing the decidiousness thereof.

Another limitation discouraging use of the aforesaid process has been the packaging and marketing required for these products to reach the dining table in acceptable conditions. This problem had not been overcome heretofore, particularly concerning culinary preparations which have not been able to be conserved and sold with all its qualities.

### Disclosure of the Invention:

Because of the lack of suitable processs for conserving, packaging and marketing culinary preparations, I have investigated and developed a process that combines the best of different conservation techniques in such a way to make it possible to apply the process to obtain meal products that may reach the dining table in immediate edible condition, that is culinary preparations ready for serving, either dehydrated or after being subject to a simple and swift rehydration process.

The previous principles are based on the discovery of a combination of different techniques that advantageously reduce overall power consumption. Preliminary dehydration by means of which over 50% of the original water content is extracted is first accomplished by cooking different kinds of products, such as meat, fruit and vegetables, under the effect of heat to prepare culinary products in which the desired taste qualities are not lost. This cooking may be done by applying heat directly, without immersion in liquid media, such as cooking with charcoal, but also by immersion in oils, as is the case of fritters. The preliminary dehydration thus achieved may then be combined with other techniques taken, for example, from the art of the lyophilization.

The at least 50% reduction in water in relation to the original product gives rise to various effects which contribute to reduce the cost of processs which were inherently costly. Advantages are realized which may be summarized in that the product does not need to be frozen to very low temperatures before subliming under the effect of vacuum. The product may be preheated and then finally heated up to a higher temperature to shed the residue water. Flavour is unaffected and a lower vacuum is sufficient for lyophilization. The process is substantially shorter and the required condensator temperature may be higher. Culinary preparations may thus be obtained at a substantially lower cost and conserving the original flavour and fragrance of the product.

In order to render the products according to the invention harmless to microbiological attack and deter decidiousness thereof in the long term, I have researched a suitable method of creating a barrier against moisture which is independent of whatever packaging is used for marketing the product and includes forming an oily layer or barrier by frying or cooking in oil, as with fritter for example. I have found that once desecated, the product acquires a biological barrier in the form of an essentially hydrophobic area produced by the linkage of oil molecules. Although such a product would enjoy the benefit of resisting humidification and, at the same time, conserve its initial organoleptic properties, this does not mean that the product would be enjoyable anyway to all eaters.

If a product which has simply been fried or cooked in oil and dehydrated or liofilized is eaten, any portions which did not combine with the oil would quickly be hydrated by saliva in the mouth because such portions are hydrophilic as a result of the desecation, whatever the dehydration technique applied. These portions are hidden inside the product but become quickly exposed when the product is chewed. The water covetness of a liofilized product is very high and, upon chewing, all these hydrophilic portions quickly absorb the saliva, thus creating an immediate sensation of dryness in the palate and thirst. Moreover, while the oily barrier desirably protects most of the hydrophilic part of the product against absorption of moisture, on the other hand this barrier would preclude the product from being rehydrated for consumption.

Bearing in mind average consumer preferences, conserved products should preserve all their original qualities such that they should be able to manifest themselves as if the product had not been treated for conservation. Therefore, in developing the present invention, I looked at the possibility of rehydrating liofilized or desecated products.

As stated beforehand, the surface of the cooked or fried food products would be hydrophobic, making rehydration by direct contact with water extremely difficult or slow. Although this process may be speeded up by putting the food in hot water to solubilize the oily matter, such a process would anyway be slow in practical terms and operatively complicated as far as the food processing industry is concerned.

Considering the principles discovered regarding oil-cooked products, I looked for a product which would combine the benefits of the hydrophobic and biological barrier provided by an oily cooking medium or the fritter without the drawbacks that this barrier produces when one wants to rehydrate the fried product at the time it is to be eaten.

### Summary of the Invention:

Therefore, an object of the present invention is to provide a stable culinary preparation comprising a food product cooked in an oily medium and dried, which may be conserved for extensive periods of time by virtue of a high percentage thereof is in a hydrophilic condition but protected against absorbing moisture and resulting biological attack by means of a hydrophobic barrier which comprises hydrophilic areas enabling controlled hydration.

More particularly, an object of the present invention is to provide a desecated culinary preparation having an outer surface having hydrophobic properties obtained by oily means as well as hydrophilic properties enabling the preparation to be rehydrated at a controlled rate, whereby the preparation may be used as for a highly-desecated, long-term stabilized food product which conserves, and may even enhance, substantially all its initial organoleptic and culinary properties, and wherein the culinary preparation comprises an inner hydrophilic structure which is desecated, alveolized and crispy and circumscribed by an outer surface comprising hydrophobic and hydrophilic areas in a specific relationship that determines a rate of rehydration, since the outer hydrophilic areas are connected to the inner structure of the preparation.

Another object of the present invention is to provide a process for obtaining and conserving a fried food product which may be conserved in a stable state of dehydration for extensive periods of time and is suitable for consumption in that state or else may be rehydrated for recovering its original cooking qualities. The method of the invention comprises the steps of frying the food product in oil and desecating the product to eliminate water and free oil content therein until a residual moisture content less than 10% is reached. The desecating step may comprise the steps of: chilling the fried food product down to a minimum temperature necessary to solidify the water and/or oily liquid content of the product; subjecting the thus frozen product to a vacuum sufficient to sublime the water content and evaporate part of the oil until the residual moisture content is less than 10%.

Yet another object of the present invention is to provide a process for obtaining, conserving and marketing culinary preparations, which may be conserved in stable dehydrated states for long periods of time for consumption in the dehydrated state or else after being rehydrated to recover its initial culinary properies as soon as it is cooked, wherein the process comprises the steps of:
cooking a food product by subjecting it to heat, preferably in an oily medium, until a degree of preliminary dehydration of the product is achieved which conserves a limited amount of residual water content and its entire aromatic and flavour qualities;
chilling the food product down to a minimum temperature necessary to solidify the entire residual water content of the product; and thereafter
subjecting the thus frozen product to a vacuum sufficient to produce a rapid sublimation of substantially most of the previously frozen water content and, as a result of the heat and vacuum to which the product is subjected, to extract the initial water content and evaporate a substantial amount of the oily substance present in the culinary preparation.

According to features of the invention, a fried and desecated food product offers acceptable taste properties for the consumer because an adequate combination of hydrophobic and hydrophilic portions are provided which control the degree of absorption of saliva when the product is chewed. Any suitable desecating process may be applied for extracting the water from the product such that the latter is left alveolized to a greater or lesser extent, depending on the desecating technique applied, forming an extensive cribble which, when chewed, produces a very likeable crispy effect on the palate. This feature is preserved and protected by the oily barrier according to the present invention, precluding premature humidification of the product.

Therefore, according to the invention, the product cooked in oil or in an oily medium such as to form a hydrophobic surface, is further formed with hydrophilic areas which manifestly covet water when placed in contact with water or another substance such as saliva in the boca. The resulting product of the invention has an inner portion or core which comprises most of the volume thereof and which is essentially hydrophilic but is surrounded by an outer hydrophobic surface formed by the oily layer. The invention precisely provides for the formation of hydrophilic areas arranged or produced on the outer surface which form channels which enable the conserved and protected major hydrophilic inner body of the product to become immediately hydrated in an external acqueous solution or environment.

Accordingly, the product consists of a fried and desecated food product which may be later rehydrated to restore its properties prior to dehydration, resulting in a product which conserves its original features and is commercially competitive in relation to other known ways of preserving products of this type.

In the process of the invention, the preliminary dehydration may preferibly be carried out to extract at least 75% of the original water content in the fresh product and the chilling step may comprise applying a minimum temperature to the product for freezing the liquid content in the product and enhanced by applying an initial vacuum of not more than 1,000 microns mercury column and thereafter gradually reducing the vacuum until, once the applied chilling is over, the product continues cooling by endothermal effect by virtue of the initial accelerated evaporation phenomena until it becomes thermally stabilized. Thereafter, the product, in thermal equilibrium, is heated up to a final temperature not less than 50°C in a final vacuum not exceding 500 microns mercury column, to endure a state of sublimation until at least 95% of the inicial water content of the preparation is extracted.

In addition, the evaporation of the oily content is achieved applying final lyophilization temperatures of up to 100°C and final vacuums of up to 0.05 microns mercury column. The culinary preparation may be rehydrated by localized cutting or puncturing the hydrophobic cover layer for transfering a required amount of liquid to the inner hydrophilic body or else simply rehydrated through contact with water or water spray.

The culinary preparations of the invention may be packaged in an inert gas environment inside containers suitable for conservation and marketing. Alternatively, in the cooking step, the culinarily prepared product may be cooled and a plastics tray may be thermoformed over the cooled food product, and the steps of freezing and applying vacuum may be practiced with the product packaged inside the tray, whereafter the tray containing the product may be packaged inside the container. The container is then sealed to conserve the inert gas content. In this case, the tray forms a rigid support adjusted snugly to the shape of the product and is thermoformed by means of plastics sheets arranged over the culinarily prepared product itself.

### Examples of the Invention:

Reference is hereinafter made to examples of food products obtained by the processes provided by the present invention and which comprise novel culinary preparations.

### EXAMPLE 1

Liofilized fried chips were prepared from the Bintje variety potato which is produced below 40° South latitude. Potatoes over 6 cm in diameter were mechanically peeled and chopped into chips having four flat side walls 6 mm long. The solids content of the chips was 23.2%. The fresh matter was submerged in oil at a temperature of between 180°C and 200°C during 5 minutes. Once fried, the chips were cooled and cut off at both ends to expose in this way a cooked yet unfried surface representing a hydrophilic area while all the rest of the outer area remains hydrophobic. The product was frozen down to -18°C and and subjected to a lyophilization cycle under a final vacuum less than 500 microns and temperatures over 60°C, to extract the water residue and the free oil to achieve a residual moisture content of less than 10%.

The resulting fried chips were packaged in metalized polyethilene packets suitable for marketing.

For the product rehydration process, the packets were reopened and filled with tap water. The fried chips were completely rehydrated in a few seconds, not more than about 30 seconds. The package was then turned upside down to pour out the unabsorbed water. In this condition, the product was ready to be refried for 60 to 120 seconds in oil at 180°C. Other product samples were cooked in an oven at 200°C during 120 to 180 seconds. In this latter case, a product nearly just as crispy as the refried product was obtained by applying an oil spray to the oven dish or, in other cases, directly to the chips before ovening.

### EXAMPLE 2

Desecated fried chips were prepared from the Bintje variety potato. The potatoes were mechanically peeled and chopped into grated chips having walls about 1.5 cm thick and orifices of about 1.5 cm in average diameter. The fresh matter was submerged in oil at a temperature of 120°C during 5 minutes and, after removal from the oil, desecated by softly heating in an oven up to a temperature of 60°C during 90 minutes until the residual moisture content was less than 10%.

The food product obtained in this way was conserved and remained stable in room temperature for at least 12 months. The desecated fried chips were rehydrated by immersion in water during one hour. Once moistened, it was sufficient to cook them for two minutes in oil at 180°C to obtain a hot and crispy preparation having the same properties as prefried potato chops of like morphology. In this case, rehydration was achieved with a thinner hydrophobic zone and a longer water contact period. The hydrophobic thickness may be gauged by varying the time the fried chips are left in oil. Shorter frying times result in less thickness and provide a faster rehydration rate and viceversa.

### EXAMPLE 3

A prefried, liofilized meat product popular in some parts of the world (where it is known as "milanesa" or "milanese", similar to scallops) was prepared from surloin meat cuts having thicknesses not exceding about 3 to 4 mm and covered by a mixture of egg, grated bread, aromatizers and condiments. This preparation was submerged in oil at 140°C during 10 minutes, thereafter frozen at -22°C and finally subjected to a lyophilization cycle at a vacuum under 500 microns mercury column and a final temperature of 60°C, in the product mass.

The liofilized "milanese" preparations contained a moisture residue under 10% of its total weight and were packaged in packets of aluminium sheets, in which way they were conserved at room temperature without any noticeable deterioration for not less than 12 months. The preparation could be rehydrated and heated by simply submerging the same in water for just a few seconds. It was also possible to rehydrate the preparation by spraying an amount of water thereon similar to the original weight of the "milanese" before desecation. Some samples of the product could then be heated in a convection oven to 200°C during 3 minutes and others were heated in a radiation oven (of a microwave type) during 40 seconds at maximum power.

The food preparations were placed for heating in pans on which a thin oil film was previously spread. The "milanese" product thus obtained was as good as the superfrozen kind. Rehydration was practically instantaneous by virtue of the permeability properties of cover layer of the fritter, inparticularly the grated foodstuff. In this way, the rehydration rate may be predetermined by selecting adequate proportions for the forementioned cover mixture. More particularly, the rehydration rate may be enhanced or slowed down by selecting an appropriate grating size of the bread element.

### EXAMPLE 4

"Milanesed" fish morsels were prepared from cod fillets chopped into approximately 3 x 3 cm morsels. The fishmeat was soaked in a mixture of egg and aromatics. Thus treated, the cod was covered in grated bread forming a cover layer the thickness of which was about 20% of the fillet morsel.

This product proved to have a good degree of hydration control for consumption in its dried state, that is without being hydrated previously.

The preparation was fried for between 2 and 5 minutes, depending on the degree of colour (toasting) desired, in cooking oil at 180° C. The morsels were frozen thereafter to -20° C and subjected to a lyophilization process under final vacuum below 500 microns in an environment of nitrogen gas. The temperature in the terminal period of the process was raised until the product reached 60°C.

The liofilized morsels were then taken out of the process equipment after breaking the nitrogen vacuum and packaged in a pure nitrogen environment in double-sheeted sachets made of polyethylene and aluminium film. The residual moisture was measured to be 3% and remained stable at room temperature (25°C), for a minimum of 2 years.

These morsels were particularly distinct for their crispyness while in the dried state. The main feature of liofilized products is there palate fragility since the process forms broad alveoles therein. The lyophilization leaves empty spaces where there had been water before. This, aside from accelerating rehydration, produces slim films of solid matter in given pieces which are broken up when chewed and provide an agreeable crispy sensation.

The liofilized morsels may be both crispy and at the same time contain large hydrophilic areas. This represents a significant advantage over other morsels which, to be so brittle, need to be cooked more in oil and therefore are basically hydrophobic.

The liofilizeds morsels expose their hydrophilic portion when ruptured by the chewing action. This produces a sudden intake of saliva which also suddenly increases the relative concentration of some molecules, specially tasteful molecules such salt and sugar. A very advantageous nutritional flavouring is attained in this way because the achieved tasty effect is due only to the presence of natural molecular contents.

This is immediately evident in the case of "milanese" cod morsels since they taste of salt and have flavours and fragrances which are more evident in liofilized form than in rehydrated form. Another feature of the fish morsel is that it may be soaked in flavouring solutions such as lemon juice which invades the overall morsel volume rather than just spreading superficially thereover.

### EXAMPLE 5

Crispy biscuits were prepared from a mixture of mashed potato, mashed onion, cheese and oil. The mixture was cooked to 130° C during 10 minutes. After finishing cooking, liquified vegetal jelly and aromatic herbs were added. The preparation was moulded in plastics containers of different shapes.

This combination had a high degree of hydration control for consumption after being rehydrated.

The mixture was frozen to -20° C and placed in a liofilizator where it was subjected to a vacuum of less than 500 microns and increasing temperatures to reach 60° C by the terminal lyophilization stage.

The product was taken out of the liofilizator after breaking the pure nitrogen vacuum therein and packaged in a pure nitrogen in double-sheeted sachets made of polyethylene and aluminium film. The biscuits obtained by this process remained stable and crispy for a minimum of 2 years.

If desired, the product may be rehydrated by placing it in contact with water for a few seconds and, once moistened thus, be heated in a convection or radiation oven or fried during 2 minutes at 180° C.

## Claims

1. A culinary preparation comprising:
an inner hydrophilic structure which has been desecated; and
an outer surface surrounding said inner structure, said outer surface comprising:
at least one hydrophobic area and
at least one hydrophilic area connected to said inner hydrophilic structure,
whereby said hydrophilic area enables hydration of said preparation at controlled rates, said hydrophobic and hydrophilic areas having a relationship between one another for determining said rehydration rate of said inner hydrophilic structure.

2. A preparation according to claim 1, wherein said preparation has been stabilized for conservation during an extensive period of time, has a high degree of dehydration and conserves or enhances substantially all its initial organoleptic and culinary properties.

3. A preparation according to claim 1, wherein said inner hydrophilic structure is desecated, alveolized and crispy.

4. A preparation according to claim 1, wherein said outer surface hydrophobic area includes a hydrophobizing oil structure formed by frying.

5. A preparation according to claim 1, wherein said outer surface is essentially hydrophobic and said hydrophilic area comprises cuts or punctures formed on said outer surface.

6. A preparation according to claim 1, wherein said hydrophilic area comprises permeable portions.

7. A preparation according to claim 1 comprising a vegetable product.

8. A preparation according to claim 7 comprising fried chips, wherein said hydrophilic areas have been formed at the chip ends.

9. A preparation according to claim 1 comprising a meat or fish product.

10. A preparation according to claim 1, wherein said outer surface is formed by a cover layer surrounding said inner structure and wherein hydrophobic and hydrophilic area relationship is determined by the grating size of said outer cover layer.

11. A preparation according to claim 1, wherein said hydration is produced during chewing by exposing the hydrophilic areas to the saliva.

12. A process for preparing a dehydrated, long-term conservable and substantially hydrophilic food product for consumption in the dehydrated state or after being rehydrated to recover original cooking qualities, the process comprising the steps of:
providing an initial food preparation having a substantial initial moisture or water content;
cooking the food preparation in a fluid medium capable of forming a substantially hydrophobic outer layer surrounding said product; and thereafter
desecating the cooked product to eliminate the water and free fluid medium content from therein until the residual moisture content therein is less than 10% of the initial preparation weight, thereby forming an outer cover layer on the food product, said layer having a controlled hydrophobility.

13. A process according to claim 12, wherein said fluid medium is oil and product desecating step comprises:
chilling the fried food product down to a minimum temperature sufficient to solidify the water and oil contents in the product; and
subjecting the thus frozen product to a vacuum sufficient to sublime the solid water content and evaporate the oil content until the overall moisture residue in the product is not more than 10% of the initial product weight.

14. A process for obtaining a culinary preparation for conservation in a stable state of dehydration during relatively extensive period of time before consumption in said dehydrated state or after being rehydrated to recover immediately original cooking qualities, the process comprising the steps of:
providing a food product comprising a body having a substantially hydrophilic structure;
preliminary dehydrating said provided product by cooking the same in a heated oily medium, until the product retains no more than a limited amount of residual water content and substantially the full range of desirable flavour and fragrance qualities,
chilling the food product down to a minimum temperature sufficient to solidify substantially all said residual water content,
dehydrating the chilled product by subjecting the chilled product to a vacuum sufficient to substantially produce sublimation of the frozen residual water content and to produce final temperature and vacuum conditions in the product which, in addition to extracting said residual water content, evaporate a substantial part of oil and oily matter present in the cooked product, whereby a cover layer is formed around said body structure, said outer cover layer being at least partly or controllably hydrophobic.

15. A process according to claim 14, wherein said medium is oil.

16. A process according to claim 15, wherein said cooking and preliminary dehydrating step is performed by heat exchange with a said oil at a temperature up to 200° C.

17. A process according to claim 14, wherein said preliminary dehydration comprises extracting at least 75% of the initial water content in the product.

18. A process according to claim 14, wherein:
said chilling step comprises:
subjecting the product to a minimum temperature necessary for freezing the liquid content in the product and to an initial vacuum at a amximum pressure of not more than 1,000 microns mercury column, and thereafter
reducing the vacuum gradually until the product continues cooling without application of external cooling until it becomes thermally stabilized by means of an endothermal reaction which follows an initial accelerated evaporation; and therafter
said dehydrating step comprises a lyophilization cycle heating said substantially thermally stabilized product up to a final temperature not less than 50°C in a vacuum not more than 500 microns mercury column to sublime and extract at least 95% of the initial water in the product.

19. A process according to claim 14, wherein said medium is an oily liquid and is evaporated during a lyophilization cycle at a final temperature of up to 100° C and vacuum of up to 0.05 microns mercury column.

20. A process according to claim 14, wherein the culinary preparation is rehydrated by cutting or puncturing the hydrophobic cover layer to deposit a required amount of liquid in the inner hydrophilic body structure.

21. A process according to claim 14, comprising the further step of packaging the culinary preparation in a conservation container containing an inert gas environment.

22. A process according to claim 14, wherein
said cooking step includes cooling the culinarily prepared product and placing the cooled product in plastics support means, and
wherein said dehydration step is carried out on said food product inside said support means, whereafter said support means with the dehydrated product inside is placed inside a package containing an inert gas environment.

23. A process according to claim 22, wherein said support means comprises a rigid tray and a plastics sheet which is thermoformed over said culinary product.

24. A process according to claim 14, wherein the culinary preparation is rehydrated by direct contact with water or by spraying with water a relatively short time before it is to be consumed.
